# FASCICULE DE BREVET EUROPEEN

(11) **EP 1 919 652 B1**
(45) Date de publication et mention de la délivrance du brevet: **10.02.2010**
(21) Numéro de dépôt: 06726271.7
(22) Date de dépôt: 23.03.2006
(51) Int. Cl.: B23K 26/22, B23K 26/24, B23K 26/32

(54) **PROCEDE D'ASSEMBLAGE PAR SOUDAGE LASER PAR TRANSPARENCE DE TOLES RECOUVERTES D'UNE COUCHE DE PROTECTION ET ESPACÉES LES UNES DES AUTRES A L'AIDE DE PROTUBÉRANCES**
VERFAHREN ZUR MONTAGE VON MIT EINER SCHUTZSCHICHT VERSEHENEN BLECHEN DURCH LASERDURCHSTRAHLSCHWEISSEN, WOBEI DIE BLECHEN DURCH AUSSCHWELLUNGEN GETRENNT WERDEN
METHOD FOR ASSEMBLING METAL SHEETS WHICH ARE COATED WITH A PROTECTION LAYER BY LASER TRANSPARENT WELDING AND WHICH ARE INTERSPACED BY PROTUBERANCES

(30) Priorité: 18.04.2005 FR 0503838
(43) Date de publication de la demande: 14.05.2008
(73) Titulaire: RENAULT S.A.S., 92100 Boulogne Billancourt (FR)
(72) Inventeur: DAUVEL, Bertrand, F-78540 Vernouillet (FR); JOLY, Marion, F-78000 Versailles (FR)
(74) Mandataire: Guyon, Rodolphe C.
(86) Numéro de dépôt international: PCT/FR2006/050255
(87) Numéro de publication internationale: WO 2006/111671

(56) Documents cités:
- EP-A- 1 516 691
- WO-A-2005/035179
- DE-A1- 10 053 789
- PATENT ABSTRACTS OF JAPAN vol. 2000, no. 23, 10 février 2001 (2001-02-10) -& JP 2001 162387 A (TOYOTA MOTOR CORP), 19 juin 2001 (2001-06-19)
- GRAHAM M P ET AL: "ND:YAG LASER BEAM WELDING OF COATED STEELS USING A MODIFIED LAP JOINT GEOMETRY" WELDING JOURNAL, AMERICAN WELDING SOCIETY, MIAMI, FL, US, vol. 75, no. 5, 1 mai 1996 (1996-05-01), pages 162-S, XP000622042 ISSN: 0043-2296
- PATENT ABSTRACTS OF JAPAN vol. 2000, no. 23, 10 février 2001 (2001-02-10) -& JP 2001 162388 A (HONDA MOTOR CO LTD), 19 juin 2001 (2001-06-19)

## Description

L'invention concerne un procédé d'assemblage par soudage laser par transparence de tôles recouvertes d'une couche de protection conformément au préambule de la revendication 1 (voir, par example, EP 1 516 691 A).

Les procédés de soudage laser par transparence nécessitent une maîtrise de l'accostage des tôles à souder afin de garantir la fusion et donc la soudure. Par ailleurs, lors de la soudure laser par transparence de tôles recouvertes d'une couche de protection, par exemple une couche de zinc, la température atteinte pour fondre et fusionner les tôles provoque la vaporisation des couches de protection. Si les tôles sont en contact étroit à l'endroit de la soudure, les gaz ainsi formés ne peuvent s'échapper que par le bain de fusion, provoquant ainsi une dégradation de la qualité de la soudure.

Plusieurs solutions existent afin d'évacuer les vapeurs provenant des couches d'évaporation.

Dans le document DE 10 042 538, une tôle placée entre deux autres tôles présente une surface irrégulière de sorte que, lorsqu'elle est en contact avec les autres tôles, des cavités sont créées par lesquelles les gaz formés peuvent s'échapper. Cette solution nécessite cependant un traitement particulier des surfaces de la tôle afin de former les rugosités.

Dans le document DE 10 053 789, un espace est créé entre les deux tôles à assembler par dépôt entre les tôles d'une structure, par exemple un film flexible comportant des orifices. Cette solution nécessite la fabrication et le dépôt d'un autre matériau, ce qui s'avère long et coûteux.

Dans d'autres procédés, tel que celui décrit dans le document EP 337 182, l'une des tôles à assembler est déformée par emboutissage sur toute sa longueur. Cette déformation longitudinale permet à la fois l'évacuation des gaz formés et le guidage d'un faisceau laser continu. Cette solution nécessite cependant de réaliser un impact important sur la tôle, défavorable sur la tenue mécanique de la tôle. Par ailleurs, l'utilisation d'un faisceau laser continu s'avère coûteux.

Un autre type de procédé de soudage laser par transparence est décrit dans le document DE 44 43 826, au cours duquel les tôles à assembler sont maintenues à distance l'une de l'autre. Le problème d'évacuation des éventuels gaz formés par les couches de protection ne se pose alors pas. L'écartement des tôles nécessite l'emboutissage ponctuel de l'une des tôles afin de rapprocher les tôles et de permettre le soudage. Ce procédé nécessite toutefois le maintien des deux tôles à une distance prédéterminée l'une de l'autre pendant les opérations d'emboutissage et de soudage.

L'invention vise à pallier ces inconvénients en proposant un procédé d'assemblage par soudage laser par transparence permettant l'évacuation des gaz formés par la vaporisation des couches de protection des tôles, qui soit simple à mettre en oeuvre, et peu coûteux. Le procédé selon l'invention présente également l'avantage de ne pas nécessiter de déformations importantes des tôles de sorte que leur tenue mécanique n'est pas ou peu affectée.

A cet effet, l'invention concerne un procédé d'assemblage d'au moins deux tôles par soudage laser par transparence tel que défini dans la revendication 1.

Dans une variante, la tôle en contact avec les protubérances de la tôle déformée est également recouverte d'une couche métallique de protection.

Selon un autre mode de réalisation, seule la tôle en contact avec les protubérances de la tôle déformée est recouverte d'une couche métallique de protection.

Conformément à l'invention, lors du serrage des tôles par les moyens d'accostage, des cavités se forment entre les tôles à souder autour des protubérances. Ces cavités sont suffisantes pour recevoir et/ou évacuer les gaz formés par la vaporisation des couches de protection sans conduire à une dégradation de la qualité de la soudure. De plus, l'application de manière discontinue du faisceau laser uniquement dans au niveau des protubérances permet de réduire les coûts par rapport aux procédés utilisant un faisceau laser continu.

De préférence, on réalise des déformations ponctuelles formant des protubérances sphériques. De telles empreintes sphériques sont faciles à réaliser, par exemple par emboutissage, et peuvent facilement être reproduites à l'identique ce qui permet d'améliorer la reproductibilité du soudage et son automatisation.

Conformément à l'invention, lors de l'étape de soudage, le faisceau laser est appliqué suivant un segment rectiligne de longueur prédéterminée au niveau de chaque protubérance.

Conformément à l'invention, chaque segment passe par, ou à proximité, du point de contact entre les tôles.

Plus particulièrement, chaque segment est sensiblement centré sur le point de contact entre les tôles.

Conformément à l'invention, les segments sont sensiblement perpendiculaires à la trajectoire des protubérances.

Avantageusement, les moyens d'accostage sont situés à une même distance prédéterminée de part et d'autre de la trajectoire des protubérances.

L'invention est maintenant décrite en référence aux dessins annexés, non limitatifs, dans lesquels :
- la figure 1 est une vue en coupe de deux tôles soudées suivant un mode de réalisation du procédé selon l'invention ;
- la figure 2 est une vue en coupe de trois tôles soudées selon une variante du procédé selon l'invention ;
- La figure 3 est une vue en plan des tôles assemblées montrant un segment de faisceau laser par rapport à une protubérance d'une tôle déformée ;
- La figure 4 est une vue en plan montrant une protubérance, les moyens d'accostage des tôles ainsi qu'une protubérance d'une tôle déformée ;
- La figure 5 représente une vue en perspective d'une protubérance sphérique de rayon r formée sur une tôle d'épaisseur e.

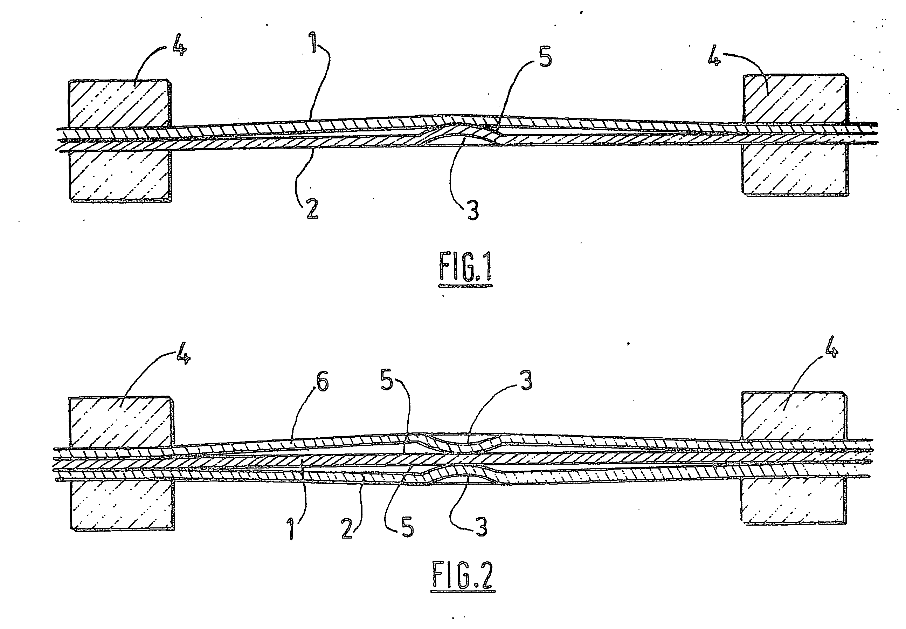

La figure 1 représente deux tôles métalliques 1 et 2 à assembler par soudage laser par transparence. L'une des tôles, ou les deux, est recouverte d'une couche métallique de protection telle qu'une couche de zinc.

Sur l'une des tôles 2, sont réalisées des déformations ponctuelles, par exemple par emboutissage, afin de former des protubérances 3 saillant toutes de la même face de la tôle 2. Ces déformations sont réalisées le long d'une trajectoire prédéterminée. Cette trajectoire correspond à la trajectoire le long de laquelle on souhaite souder les deux tôles.

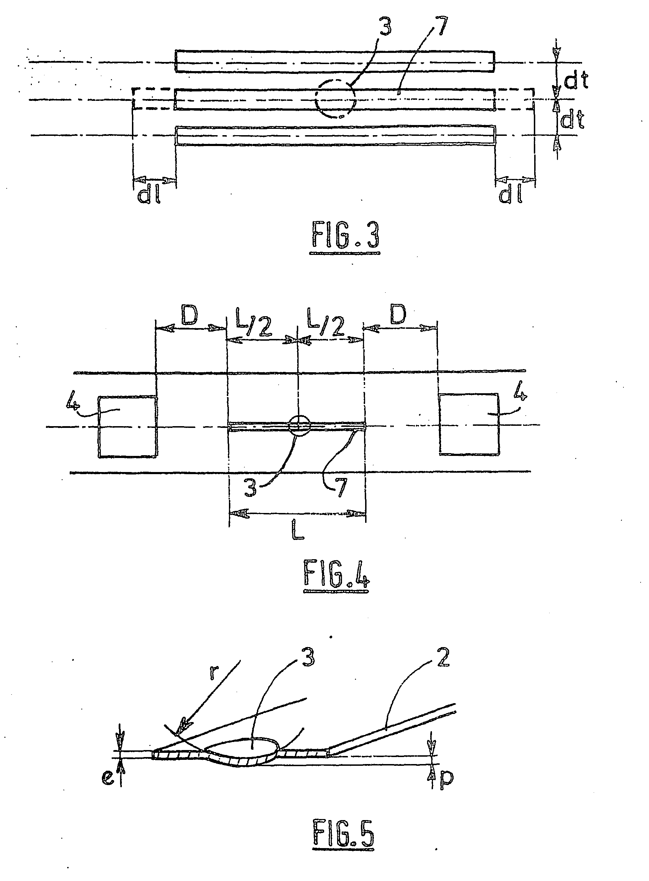

De préférence, les déformations sont réalisées de manière à former des protubérances sphériques (figure 5), de sorte qu'elles peuvent être facilement être mises en oeuvre de manière reproductible. Bien entendu, d'autres formes de protubérances peuvent également être réalisées.

Lors de leur assemblage, les deux tôles sont superposées de sorte que les protubérances 3 de la tôle déformée 2 saillent en direction de l'autre tôle 1.

Les deux tôles sont maintenues serrées ensemble par des moyens d'accostage 4 de sorte que la tôle déformée 2 soit en contact avec l'autre tôle 1 au niveau de chaque protubérance 3. A cet effet, les moyens d'accostage 4 sont de préférence placés de part et d'autre de chaque protubérance 3. Il peut s'agir de moyens d'accostage s'étendant de manière continue sur tout le long de la trajectoire des protubérances, ou bien de moyens d'accostage ponctuels placés au niveau de chaque protubérance.

Du fait de la présence d'une protubérance 3, le serrage ensemble des tôles 1, 2 crée une cavité 5 sur le pourtour de la protubérance. Cette cavité 5 permet de recevoir les gaz formés lors de la vaporisation des couches métalliques de protection situées sur les faces des tôles 1, 2 en regard.

De manière similaire, la figure 2 représente l'assemblage de trois tôles métalliques 1, 2 et 6 superposées. Dans ce cas, les deux tôles extérieures 2 et 6 sont déformées de manière à comporter des protubérances 3. Ces protubérances 3 sont de préférence sensiblement identiques et réalisées suivant des trajectoires sensiblement identiques. Les tôles 1, 2, 6 sont alors superposées de manière à ce que les trajectoires le long desquelles les protubérances 3 de chaque tôle déformée s'étendent, se superposent, tel que représenté sur la figure 2.

De même que pour l'assemblage de deux tôles, les trois tôles sont maintenues superposées et serrées par des moyens d'accostage 4, de sorte que les protubérances 3 des tôles déformées 2 et 6 saillent en direction de la tôle centrale 1, les protubérances 3 se superposant. Des cavités 5 sont alors formées autour de chaque protubérance, de part et d'autre de la tôle centrale 1 permettant de recevoir les gaz formés par la vaporisation des couches métalliques de protection situées sur le faces en regard des tôles.

Dans les deux cas, lorsque les tôles sont maintenues serrées ensemble par les moyens d'accostage 4, la soudure est réalisée au moyen d'un faisceau laser (non représenté) appliqué par transparence de manière discontinue au niveau de chaque protubérance 3.

Conformément à l'invention, ce faisceau laser est appliqué suivant un segment rectiligne 7 représenté sur les figures 3 et 4.

Dans les exemples représentés selon l'invention, ce segment 7 s'étend sensiblement perpendiculairement à la trajectoire des protubérances 3, et est aligné sur les moyens d'accostage 4 (figure 4).

Conformément à l'invention, le segment 4 passe par ou à proximité de chaque protubérance 3. Il peut ainsi être légèrement décalé transversalement d'une valeur dt ou longitudinalement d'une valeur dl (figure 3) sans nuire à la qualité de la soudure. Il est de préférence centré sur la protubérance 3.

On définit les paramètres suivants : L, longueur du segment ; D, la distance entre chaque extrémité du segment et le moyen d'accostage 4 correspondant (figure 4) ; p, le débordement de la protubérance (figure 5).

Les dimensions désirées de la cavité 5 (correspondant au jeu entre les tôles assemblées) en fonction de la longueur du segment 7, sont obtenues en jouant sur la distance (D + L/2) entre les moyens d'accostage 4 et la protubérance considérée, et sur le débordement p de la protubérance.

La réalisation de protubérances sensiblement identiques le long de la trajectoire de soudage permet d'automatiser le soudage en facilitant le repérage de la position de chaque protubérance avant l'application du faisceau laser. Le faisceau laser peut alors être appliqué suivant un segment dont la position et les dimensions sont déterminées par rapport à la position de chaque protubérance.

Le procédé selon l'invention peut être utilisé dans le domaine automobile. Par exemple, il peut être appliqué au soudage des panneaux de porte intérieur et extérieur d'un véhicule automobile.

## Revendications

1. Procédé d'assemblage d'au moins deux tôles (1, 2, 6) par soudage laser par transparence, l'une des tôles (2, 6) au moins étant recouverte d'une couche métallique de protection, comprenant les étapes suivantes :
- réaliser, sur au moins l'une (2, 6) des tôles à souder, des déformations ponctuelles agencées le long d'une trajectoire prédéterminée, de manière à former des protubérances (3) sur une face de la tôle (2, 6) ainsi déformée,
- superposer les tôles (1, 2, 6) à souder de sorte que les protubérances (3) de la tôle (2, 6) déformée saillent en direction d'une autre tôle (1) à souder, la tôle déformée étant recouverte d'une couche métallique,
- maintenir serrées les tôles (1, 2, 6) à souder grâce à des moyens d'accostage (4), de sorte que les tôles (1, 2, 6) soient en contact au niveau des protubérances ponctuelles (3),
- souder ensemble les tôles (1, 2, 6) au moyen d'un faisceau laser appliqué par transparence de manière discontinue selon un segment de longueur (L) prédéterminée passant par ou à proximité de chaque protubérance (3),
**caractérisé en ce que** le segment (7) est rectiligne, les segments (7) étant sensiblement perpendiculaires à la trajectoire des protubérances (3), et les moyens d'accostage (4) sont disposés de part et d'autre de la trajectoire prédéterminée, ménageant entre les tôles (1, 2, 6) chacun une cavité (5) recevant les gaz formés lors de la vaporisation de soudage de la couche métallique de protection, les dimensions désirées de la cavité (5) en fonction de la longueur L du segment (7) étant obtenues en jouant sur la distance (D+L/2) entre les moyens d'accostage (4) et la protubérance (3) considérée, et sur le débordement (p) de la protubérance, avec D représentant la distance entre chaque extrémité du segment (7) et le moyen d'accostage (4) correspondant.

2. Procédé d'assemblage selon la revendication 1, dans lequel la tôle (1) en contact avec les protubérances (3) de la tôle déformée (2, 6) est également recouverte d'une couche métallique de protection.

3. Procédé d'assemblage selon la revendication 1, dans lequel seule la tôle (1) en contact avec les protubérances (3) de la tôle déformée (2, 6) est recouverte d'une couche métallique de protection.

4. Procédé d'assemblage selon l'une des revendications 1 à 3, dans lequel on réalise des déformations ponctuelles formant des protubérances (3) sphériques.

5. Procédé d'assemblage selon l'une des revendications 1 à 4, dans lequel chaque segment (7) passe par, ou à proximité, du point de contact entre les tôles.

6. Procédé d'assemblage selon l'une des revendications 1 à 5, dans lequel chaque segment (7) est sensiblement centré sur le point de contact entre les tôles.

7. Procédé d'assemblage selon l'une des revendications précédentes, dans lequel les moyens d'accostage (4) sont situés à une même distance prédéterminée de part et d'autre de la trajectoire des protubérances (3).

8. Procédé d'assemblage selon l'une des revendications 5 à 7, dans lequel au niveau d'une protubérance (3), le faisceau lazer est appliqué suivant le segment (7) de longueur L aligné sur les moyens d'accostage (4).

## Claims

1. Method of joining at least two sheets (1, 2, 6) by laser through-welding, at least one of the sheets (2, 6) being covered with a metal protective layer, comprising the steps consisting in:
- producing, on at least one (2, 6) of the sheets to be welded, discrete deformations placed along a predetermined path, so as to form protrusions (3) on one face of the sheet (2, 6) thus deformed;
- superposing the sheets (1, 2, 6) to be welded so that the protrusions (3) of the deformed sheet (2, 6) project towards another sheet (1) to be welded, the deformed sheet being covered with a metal layer;
- keeping the sheets (1, 2, 6) to be welded clamped together by gripping means (4), so that the sheets (1, 2, 6) are in contact around the discrete protrusions (3); and
- welding the sheets (1, 2, 6) together by means of a laser beam by laser-through welding discontinuously along a segment of predetermined length (L) passing through or nearby each protrusion (3),
**characterized in that** the segment (7) is linear, the segments (7) being substantially perpendicular to the path of the protrusions (3) and the gripping means (4) are placed on either side of the predetermined path, each leaving between the sheets (1, 2, 6) a cavity (5) that receives the gases formed during the welding vaporization of the metal protective layer, the desired dimensions of the cavity (5) as a function of the length L of the segment (7) being obtained by varying the distance (D+L/2) between the gripping means (4) and the protrusion (3) in question and by varying the offset (p) of the protrusion, where D represents the distance between each end of the segment (7) and the corresponding gripping means (4).

2. Joining method according to Claim 1, in which the sheet (1) in contact with the protrusions (3) of the deformed sheet (2, 6) is also covered with a metal protective layer.

3. Joining method according to Claim 1, in which only the sheet (1) in contact with the protrusions (3) of the deformed sheet (2, 6) is covered with a metal protective layer.

4. Joining method according to one of Claims 1 to 3, in which discrete deformations forming spherical protrusions (3) are produced.

5. Joining method according to one of Claims 1 to 4, in which each segment (7) passes through, or nearby, the point of contact between the sheets.

6. Joining method according to one of Claims 1 to 5, in which each segment (7) is substantially centred on the point of contact between the sheets.

7. Joining method according to one of the preceding claims, in which the gripping means (4) are located at a same predetermined distance on either side of the path of the protrusions (3)

8. Joining method according to one of Claims 5 to 7, in which, at a protrusion (3), the laser beam is applied along the segment (7) of length L aligned on the gripping means (4).

## Patentansprüche

1. Verfahren zum Zusammenbau von mindestens zwei Blechen (1, 2, 6) durch Laser-Durchstrahlschweißen, wobei mindestens eines der Bleche (2, 6) mit einer metallischen Schutzschicht bedeckt ist, das die folgenden Schritte enthält:
- Herstellen, auf mindestens einem der zu schweißenden Bleche (2, 6), von punktuellen Verformungen, die entlang einer vorbestimmten Bahn angeordnet sind, um auf einer Seite des so verformten Blechs (2, 6) Ausbauchungen (3) zu formen,
- die zu schweißenden Bleche (1, 2, 6) derart übereinander anzuordnen, dass die Ausbauchungen (3) des verformten Blechs (2, 6) in Richtung eines anderen zu schweißenden Blechs (1) vorstehen, wobei das verformte Blech mit einer Metallschicht bedeckt ist,
- die zu schweißenden Bleche (1, 2, 6) mit Hilfe von Anlegeeinrichtung (4) zusammengedrückt halten, damit die Bleche (1, 2, 6) in Höhe der punktuellen Ausbauchungen (3) in Kontakt sind,
- die Bleche (1, 2, 6) mit Hilfe eines Laserstrahls zusammenzuschweißen, der mittels Durchstrahlen diskontinuierlich gemäß einem Segment vorbestimmter Länge (L) angewendet wird, das durch oder in der Nähe jeder Ausbauchung (3) verläuft,
**dadurch gekennzeichnet, dass** das Segment (7) geradlinig ist, wobei die Segmente (7) im Wesentlichen lotrecht zur Bahn der Ausbauchungen (3), und die Anlegeeinrichtungen (4) zu beiden Seiten der vorbestimmten Bahn angeordnet sind, wodurch sie zwischen den Blechen (1, 2, 6) je einen Hohlraum (5) erzeugen, der die bei der Schweißverdampfung der metallischen Schutzschicht gebildeten Gase aufnimmt, wobei die gewünschten Abmessungen des Hohlraums (5) in Abhängigkeit von der Länge L des Segments (7) durch Variieren des Abstands (D+L/2) zwischen den Anlegeeinrichtungen (4) und der betreffenden Ausbauchung (3) und des Überstands (p) der Ausbauchung erhalten werden, wobei D den Abstand zwischen jedem Ende des Segments (7) und der entsprechenden Anlegeeinrichtung (4) darstellt.

2. Zusammenbauverfahren nach Anspruch 1, bei dem das mit den Ausbauchungen (3) des verformten Blechs (2, 6) in Kontakt stehende Blech (1) ebenfalls mit einer metallischen Schutzschicht bedeckt ist.

3. Zusammenbauverfahren nach Anspruch 1, bei dem nur das mit den Ausbauchungen (3) des verformten Blechs (2, 6) in Kontakt stehende Blech (1) mit einer metallischen Schutzschicht bedeckt ist.

4. Zusammenbauverfahren nach einem der Ansprüche 1 bis 3, bei dem punktuelle Verformungen hergestellt werden, die kugelförmige Ausbauchungen (3) bilden.

5. Zusammenbauverfahren nach einem der Ansprüche 1 bis 4, bei dem jedes Segment (7) durch den oder in der Nähe von dem Kontaktpunkt zwischen den Blechen verläuft.

6. Zusammenbauverfahren nach einem der Ansprüche 1 bis 5, bei dem jedes Segment (7) im Wesentlichen auf den Kontaktpunkt zwischen den Blechen zentriert ist.

7. Zusammenbauverfahren nach einem der vorhergehenden Ansprüche, bei dem die Anlegeeinrichtungen (4) sich in einem gleichen vorbestimmten Abstand zu beiden Seiten der Bahn der Ausbauchungen (3) befinden.

8. Zusammenbauverfahren nach einem der Ansprüche 5 bis 7, bei dem der Laserstrahl in Höhe einer Ausbauchung (3) gemäß dem Segment (7) der Länge L angewendet wird, das mit den Anlegeeinrichtungen (4) fluchtend ausgerichtet ist.
